# EUROPEAN PATENT APPLICATION

(11) **EP 4 544 906 A2**
(43) Date of publication of application: **30.04.2025**
(21) Application number: 25155613.0
(22) Date of filing: 04.08.2022
(51) Int. Cl.: A01K 45/00, A61D 1/02

(54) **BIRD VACCINATION SYSTEM WITH SEVERAL FLUID DISCHARGE DEVICES**

(30) Priority: 06.08.2021 EP 21190124
(62) Divisional of application: 22760971.6
(71) Applicant: Agri Advanced Technologies GmbH, 49429 Visbek (DE)
(72) Inventor: The designation of the inventor has not yet been filed
(74) Representative: Vossius & Partner Patentanwälte Rechtsanwälte mbB

(57) **Abstract**

A system (10) for administering a fluid to a bird (100) comprises a first fluid discharge device, one or several additional fluid discharge devices, and an abutment member. The first fluid discharge device has a vaccination fluid reservoir in fluid communication with a fluid discharge opening, and a needle having a tip at which the fluid discharge opening is provided. The one or several additional fluid discharge devices comprise one or several additional discharge openings (43) for delivering one or several additional fluids to the bird (100). The abutment member (42) is operative for abutment on the bird. The abutment member (42) comprises an opening (43) through which the fluid discharge opening (61) is positioned or positionable for performing a vaccination. The abutment member (42) further comprises at least one additional opening (43) through which at least one additional fluid discharge opening is positioned or positionable. The system (10) is operative to perform several of a breast vaccination, a wing vaccination, an eye vaccination.

## Description

### TECHNICAL FIELD

The disclosure relates to systems for administering a fluid, in particular for administering a vaccination fluid, to birds and methods for use in association with such systems. The invention relates to systems that allow birds to be vaccinated in an automated manner while birds are being conveyed by a conveying mechanism.

### BACKGROUND

Bird breeding is an important field of agricultural technology. Birds, such as chicken or other poultry, are being bread and kept as useful animals. In order to safeguard the well-being of the animals and mitigate the risk of disease spread, fluids, such as vaccination fluids, are administered to the animals.

For enhanced efficiency, consistency, and correctness of administration of the fluid, it is desired for the administering of the fluid(s) to be performed in a semi-automated or fully automated manner. The automation of fluid administration procedures can also reduce the stress-level of the animals.

WO 2017/125387 A1 discloses a system and a method for handling, grading and vaccinating living birds. The system may comprise one or several vaccination stations.

US 2015/0144071 A1 discloses a positioning device for presenting an avian bird and a vaccination system.

It is a challenge to administer fluids, such as vaccination fluids, to birds in an efficient manner.

### SUMMARY

It is an object of the invention to provide enhanced systems and methods for positioning a fluid discharge opening for administering fluid(s) to a bird. It is in particular an object of the invention to provide systems and control methods for such systems that allow fluid(s), such as vaccination fluids, to be administered to a bird in an efficient manner. It is also an object of the invention to provide systems and control methods for such systems that allow fluid(s), such as vaccination fluids, to be administered to a bird while the bird is being retained and moved by a conveying mechanism.

According to embodiments of the invention, systems and methods are provided that are operative to position a fluid discharge opening relative to a bird for administering a fluid, such as a vaccination fluid, while the bird is being moved in a continuous manner by a conveying mechanism.

In some embodiments, image data acquisition may be performed to capture image data of the bird. The fluid discharge opening may be automatically positioned relative to the bird based on the captured image data. The image data acquisition and positioning of the fluid discharge opening relative to the bird may be performed while the bird is being moved in a continuous manner by the conveying mechanism.

In some embodiments, a fluid delivery device comprising the fluid discharge opening may be arranged on an applicator carrier. The applicator carrier may be moveably mounted on a support. The fluid discharge opening may be arranged on the applicator carrier such that it is displaceable relative thereto. The fluid discharge opening may be positioned or positionable through an opening of an abutment member. In operation, the abutment member may be pressed against a part of the bird's body for performing a vaccination, with the fluid discharge opening impinging onto the bird through the opening in the abutment member.

According to an embodiment, there is provided a system operative to administer fluid to a bird while the bird is retained on a conveying mechanism and transported by the conveying mechanism along a first direction. The system comprises a fluid discharge device comprising a fluid discharge opening operative to discharge at least one fluid to the bird, at least one actuator operative to effect a displacement of at least the fluid discharge opening, at least one control circuit operative to control the at least one actuator, and a data acquisition device operative to capture image data of the bird retained on the conveying mechanism. The at least one control circuit is operative to control the at least one actuator to adjust a position of the fluid discharge opening relative to the bird based on the image data for administering the fluid.

The system allows fluid(s) to be administered in an efficient manner while the bird is being moved by the conveying mechanism, without having to stop movement of the bird. By controlling the position of the fluid discharge opening based on the image data, different bird shapes and/or bird positions relative to the conveying mechanism can be taken into account in an automatic manner. Correct administration of the fluid(s) can be ensured.

The at least one control circuit may be operative to control the at least one actuator to adjust the position of the fluid discharge opening relative to the bird based on the image data for administering the fluid while the bird is being moved by the conveying mechanism.

The fluid may be a therapeutic fluid.

The fluid may be a vaccination fluid.

The system may be a bird vaccination system.

The system may comprise a vaccination fluid reservoir in fluid communication with the fluid discharge opening.

The fluid discharge device may comprise a needle having a tip at which the fluid discharge opening is provided.

The at least one control circuit may be operative to adjust the position of the fluid discharge opening based on the image data such that the fluid discharge opening impinges on the bird at a target position identified based on the image data.

The at least one control circuit may be operative to determine a position of the bird relative to a retaining bracket on which the bird is retained and/or to determine physiological characteristics (such as size of the bird and/or size of the bird's breast), determine the target position of the fluid discharge opening based on the position of the bird relative to the retaining bracket and/or the physiological characteristics, and control the at least one actuator based on the position of the bird relative to the retaining bracket.

The data acquisition device may comprise an image sensor.

The system may be operative to perform feature extraction based on image(s) of the bird captured by the image sensor.

The data acquisition device may comprise an infrared camera.

The data acquisition device may comprise a 3D camera system.

The data acquisition device may comprise a structured-light imaging system.

The data acquisition device may comprise a stereo-camera system.

The data acquisition device may comprise an interface to receive the image data. The at least one control circuit may be operatively coupled to the interface.

The at least one data acquisition device may comprise a projector operative to output a line of visible or infrared light and an image sensor operative to capture an image of the line projected onto the bird.

The image sensor may be operative to capture a series of frames while the conveying mechanism moves the bird across the line of visible or infrared light:
The at least one control circuit may be operative to control the at least one actuator based on several time-sequentially captured frames of the series of frames.

The line of visible or infrared light may be positioned upstream, relative to the first direction, of the fluid discharge device.

The data acquisition device or the at least one control circuit may comprise at least one integrated circuit operative to compute surface contour data of the bird.

The at least one control circuit may be operative to control the at least one actuator based on the surface contour data.

The surface contour data may comprise 3D surface contour data.

The surface contour data may comprise a point cloud.

The at least one control circuit may be operative to control the at least one actuator to adjust the position of the fluid discharge opening relative to the bird at least along the first direction, optionally both along the first direction and a second direction orthogonal to the first direction.

The second direction may be a vertical direction.

The conveying mechanism may be operative to move the bird in the first direction at a transport speed.

The at least one control circuit may be operative to control the at least one actuator such that the fluid discharge opening may be displaced along the first direction at one or several first speeds different from the transport speed before the fluid discharge opening impinges on the bird.

The one or several first speeds may be dependent on the image data.

The at least one control circuit may be operative to control the at least one actuator such that the fluid discharge opening may be displaced along the first direction at a second speed that may be equal to the transport speed while the at least one fluid is being discharged via the fluid discharge opening.

The at least one control circuit may be operative to control the at least one actuator such that the fluid discharge opening reciprocates along the first direction.

The system may further comprise a support and an applicator carrier moveably mounted on the support.

The at least one actuator may be operative to displace the applicator carrier relative to the support to displace the fluid discharge opening.

The fluid delivery device may be mounted such that the fluid discharge opening may be displaceable relative to the applicator carrier.

The fluid delivery device may be displaceably mounted on the applicator carrier.

The fluid discharge opening may be arranged for pivoting and/or translatory movement relative to the applicator carrier.

The system may further comprise a suspension, in particular a cardanic suspension, between the fluid delivery device and the applicator carrier.

The system may further comprise an abutment member operative for abutment on the bird.

The abutment member may comprise an opening through which the fluid discharge opening may be positioned or positionable for performing a vaccination.

The abutment member and/or the applicator carrier may comprise a coupling mechanism for reversibly releasable attachment of the abutment member to the applicator carrier.

The abutment member may comprise at least one additional opening through which at least one additional fluid discharge opening may be positioned or positionable.

The system may further comprise one or several additional fluid discharge devices comprising one or several additional discharge openings for delivering one or several additional fluids to the bird.

The system may further comprise one or several additional replacement abutment members, each operative for reversibly releasable attachment on the applicator carrier.

The abutment member and at least one of the replacement abutment members may have different sizes and/or shapes.

The system may be operative to perform one or several of a breast vaccination, a wing vaccination, an eye vaccination, while the bird is being held on the conveying mechanism by its scapula-humeral joint.

A bird handling system for handling birds may comprise a conveying mechanism operative to transport a bird and the system for vaccinating the bird.

The conveying mechanism may comprise a retaining bracket operative to retain the bird.

The at least one control circuit may be operative to determine a position of the bird relative to the retaining bracket, to determine a target position of the fluid discharge opening based on the position of the bird relative to the retaining bracket, and to control the at least one actuator based on the position of the bird relative to the retaining bracket.

The retaining bracket may be operative to retain the bird by its scapula-humeral joint.

The system may be operative to administer fluid to at least 1000, at least 2000, at least 3000, at least 4000, at least 5000, or at least 6000 birds per hour.

The system may be operative to vaccinate at least 1000, at least 2000, at least 3000, at least 4000, at least 5000, or at least 6000 birds per hour.

According to another embodiment, there is provided a method of controlling at least one actuator of a system. The system comprises a fluid discharge device comprising a fluid discharge opening for discharging at least one fluid to the bird, and at least one actuator operative to effect a displacement of at least the fluid discharge opening. The method may comprise receiving, by at least one control circuit, image data of the bird from a data acquisition device, and controlling, by the at least one control circuit, the at least one actuator to position the fluid discharge opening relative to the bird based on the image data prior to performing a vaccination and while the bird is being moved by the conveying mechanism.

The fluid may be a therapeutic fluid or a non-therapeutic fluid.

The fluid may be a vaccination fluid.

The method may be performed prior to vaccinating the bird.

The method may terminate with positioning the fluid discharge opening prior to vaccinating the bird. I.e., a vaccination step as such may not form part of the method.

The method may comprise performing the vaccination.

Additional optional features that may be implemented in the method correspond to the optional features disclosed in association with the claimed system.

The method may be performed automatically using the system according to an embodiment.

According to another embodiment, there is provided a system for administering a fluid, such as a vaccination fluid, to a bird while the bird is retained on a conveying mechanism and moved by the conveying mechanism along a first direction. The system may comprise a support, an applicator carrier moveably mounted on the support, a fluid discharge device mounted on the applicator carrier and comprising a fluid discharge opening for discharging at least one fluid to the bird, at least one actuator operative to effect a displacement of the applicator carrier, and at least one control circuit operative to control the at least one actuator.

The at least one control circuit allows the actuator to be controlled in a versatile manner, responsive to a position and/or size of the bird.

The at least one actuator may be operative to effect a displacement of the applicator carrier along the first direction for administering the fluid while the bird is being moved by the conveying mechanism.

The fluid may be a therapeutic fluid.

The fluid may be a vaccination fluid.

The system may be a bird vaccination system.

The system may comprise a vaccination fluid reservoir in fluid communication with the fluid discharge opening.

The fluid discharge device may comprise a needle having a tip at which the fluid discharge opening is provided.

The fluid delivery device may be mounted on the applicator carrier such that the fluid discharge opening is displaceable relative to the applicator carrier.

The fluid delivery device may be mounted on the applicator carrier such that the fluid discharge opening is displaceable relative to the applicator carrier along the first direction and/or along a second direction transverse to the first direction.

The second direction may be a vertical direction.

The fluid delivery device may be mounted on the applicator carrier such that the fluid discharge opening is pivotable and/or displaceable in a translatory manner relative to the applicator carrier.

The system may further comprise a suspension, in particular a cardanic suspension, between the fluid delivery device and the applicator carrier.

The at least one control circuit may be operative to control a position of the fluid discharge opening relative to the bird based on three-dimensional surface contour data of the bird.

The system may further comprise a data acquisition device for acquisition of the three-dimensional surface contour data of the bird.

The data acquisition device may comprise an image sensor.

The system may be operative to perform feature extraction based on image(s) of the bird captured by the image sensor.

The data acquisition device may comprise an infrared camera.

The data acquisition device may comprise a 3D camera system.

The data acquisition device may comprise a structured-light imaging system.

The data acquisition device may comprise a stereo-camera system.

The data acquisition device may comprise an interface to receive the image data. The at least one control circuit may be operatively coupled to the interface.

The system may further comprise an abutment member operative for abutment on the bird, the abutment member comprising an opening through which the fluid discharge opening may be positioned or positionable for performing a vaccination.

The abutment member may comprise at least one additional opening through which at least one additional fluid discharge device may be positionable for performing a vaccination.

The system may further comprise one or several additional fluid discharge devices comprising one or several additional discharge openings for delivering one or several additional fluids to the bird.

The system may further comprise one or several additional replacement abutment members, each operative for reversibly releasable attachment on the applicator carrier.

The abutment member and at least one of the replacement abutment members may have different sizes and/or shapes.

The abutment member and/or the applicator carrier may comprise a coupling mechanism for reversibly releasable attachment of the abutment member to the applicator carrier.

The system may further comprise one or several additional fluid discharge devices mounted on the applicator carrier and comprising one or several additional fluid discharge openings for delivering one or several additional fluids to the bird.

The at least one control circuit may be operative to control the at least one actuator such that the applicator carrier is displaced along the first direction at a transport speed that corresponds to a transport speed of the conveying mechanism while the at least one fluid is being discharged via the fluid discharge opening.

The system may be operative to perform at least one of a breast vaccination, a wing vaccination, an eye vaccination while the bird is being held on the conveying mechanism by its scapula-humeral joint.

The system may be operative to administer fluid to at least 1000, at least 2000, at least 3000, at least 4000, at least 5000, or at least 6000 birds per hour.

The system may be operative to vaccinate at least 1000, at least 2000, at least 3000, at least 4000, at least 5000, or at least 6000 birds per hour.

A bird handling system for handling birds may comprise a conveying mechanism operative to transport a bird and the system for administering a fluid operative to be positioned adjacent the conveying mechanism for administering the fluid to the bird, e.g., for vaccinating the bird.

According to another embodiment, there is provided a method of controlling operation of at least one actuator of a system, the system comprising a applicator carrier, a fluid discharge device mounted on the applicator carrier and comprising a fluid discharge opening for discharging at least one fluid to the bird, and at least one actuator. The method may comprise receiving, by at least one control circuit, information on a bird that is being moved in a first direction by a conveying mechanism and controlling, by the at least one control circuit, the at least one actuator to effect a displacement of the applicator carrier along the first direction for administering the fluid while the bird is being moved by the conveying mechanism.

The fluid may be a therapeutic fluid or a non-therapeutic fluid.

The fluid may be a vaccination fluid.

The method may be performed prior to vaccinating the bird.

The method may terminate with positioning the fluid discharge opening prior to vaccinating the bird. I.e., a vaccination step as such may not form part of the method.

The method may comprise performing the vaccination.

Additional optional features that may be implemented in the method correspond to the optional features disclosed in association with the claimed system.

The method may be performed automatically using the system according to an embodiment.

Various effects and advantages are attained by the invention. The systems and methods allow a fluid discharge opening to be positioned for administering a fluid to a bird while the bird is being retained on and moved by a conveying mechanism. By controlling the position of a fluid discharge opening responsive to, e.g., image data that is indicative of the position of the bird on a retaining member and/or the size of the bird that is being moved by the conveying mechanism, the fluid may be administered with high accuracy and in an efficient manner, all without having to stop movement of the conveying mechanism.

### BRIEF DESCRIPTION OF THE DRAWINGS

Embodiments of the invention will be described with reference to the drawings.
Fig. 1 is a schematic view of a bird handling system.
Fig. 2 is a schematic view of a bird handling system.
Fig. 3 is a flow chart of a method.
Fig. 4 is a schematic view of a bird and a fluid delivery device positioned proximate the bird by the system.
Fig. 5 is a graph showing a velocity at which a fluid discharge opening is displaced.
Fig. 6 is a view of 3D surface contour data.
Fig. 7 is an enlarged partial view of components of a bird vaccination system.
Fig. 8 is an enlarged partial view of components of a bird vaccination system.
Fig. 9 is an enlarged partial view of components of a bird vaccination system.
Figs. 10 and 11 are schematic views of a bird vaccination system.
Fig. 12 is a schematic view of a bird handling system.
Fig. 13 is a schematic view of a retaining member of the bird handling system.

### DETAILED DESCRIPTION OF PREFERRED EMBODIMENTS

Embodiments of the invention will be described with reference to the drawings in which identical or similar reference numerals designate identical or similar components.

While embodiments are described in association with positioning a fluid discharge opening for bird vaccination, the systems and methods may be used for administering a variety of different fluids to a bird.

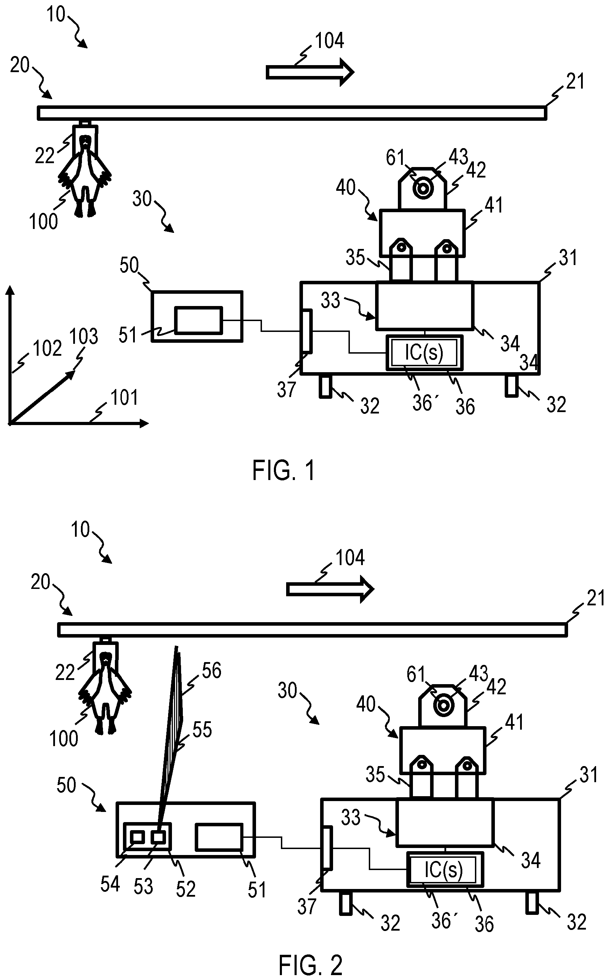

Fig. 1 is a schematic view of a bird handling system 10. The bird handling system 10 comprises a conveying mechanism 20 and a bird vaccination system 30. The bird vaccination system 30 is operative to be positioned adjacent the conveying mechanism 20. The conveying mechanism 20 is operative to move a bird 100 in a first direction 101 past the bird vaccination system 30.

The conveying mechanism 20 may comprise a retaining member 22. The retaining member 22 may be operative to retain the bird 100. Plural retaining members 22 may be provided on a conveyor, each operative to receive a bird. The conveying mechanism 20 may have an insertion section at which birds may be manually positioned in the retaining members 22. The conveying mechanism 20 may allow at least three, at least five, at least seven, at least nine human operators to concurrently place birds into retaining members 22. The retaining members 22 may be reversibly releasable engageable with and/or disengageable from a conveyor of the conveying mechanism 20, or may be securely mounted on the conveyor. The retaining members 22 may comprise one or several movable components for engaging and releasing a bird.

The bird vaccination system 30 comprises a support 31. The support 31 may have castors and/or rollers 32 that allow the support 31 to be positioned adjacent the conveying mechanism 20. The bird vaccination system 30 comprises an applicator carrier 41. The applicator carrier 41 carries one or several fluid discharge device(s) having fluid discharge opening(s) 61. The fluid discharge opening(s) 61 may be provided on needles or other injection elements that are operative to pierce a skin of the bird 31 for performing a subcutaneous, intramuscular, or other administration of vaccine or other fluids. The fluid discharge opening(s) 61 may be positioned or positionable in or through an opening 43 of an abutment member 42. In operation, the abutment member 42 may be pressed against the bird 100, allowing the fluid to be discharged to the bird via the fluid discharge opening(s) 61.

The actuator carrier 41 with the fluid delivery device(s) arranged thereon and the abutment member 42 may implement a vaccination head 40. The vaccination head 40 may be positionable relative to the support 30 for performing the vaccination.

The bird vaccination system 30 comprises an actuator 33. The actuator 33 may be operative to displace the applicator carrier 41. The actuator 33 may comprise a drive 34, which may include one or several motors. The actuator 33 may comprise a linkage 35 coupled between the drive 34 and the applicator carrier 41. The linkage 35 may comprise one, two or more than two lever arms. One, two or more than two lever arms of the linkage may be pivotably attached to the applicator carrier. The actuator 33 may comprise a robot, e.g., a two-axis robot or a three-axis robot.

The actuator 33 may be operative such that a position of the applicator carrier 41 is changed when the actuator 33 is operated, while the orientation of the applicator carrier 41 may remain the same as the applicator carrier 41 is displaced under action of the actuator 33. The actuator 33 may be operative to displace the applicator carrier 41 with the fluid discharge opening 61 provided thereon at least along the first direction 101. The actuator 33 may be operative to displace the applicator carrier 41 with the fluid discharge opening 61 provided thereon along a second direction 102, which may be a vertical direction. The actuator 33 may be operative to displace the applicator carrier 41 with the fluid discharge opening 61 provided thereon along a third direction 103, which may be a horizontal direction transverse to the first direction 101.

The bird vaccination system 30 comprises one or several control circuit(s) 36. The control circuit(s) 36 may comprise one or several integrated circuit(s) (IC(s)) 36'. The IC(s) 36' may comprise any one or any combination of a processor, a controller, an application specific integrated circuit (ASIC), a field programmable gate array (FPGA), or any combination of these or other integrated circuits. The control circuit(s) 36 may be operative to control the actuator 33. The control circuit(s) 36 may be operative to control the actuator based on at least one image of the bird 100.

For illustration, and as will be explained in more detail below, the control circuit(s) 36 may be operative to
- receive image data indicative of a three-dimensional (3D) surface contour of the bird 100 or indicative of an IR image of the bird,
- determine a target position for impingement of the fluid discharge opening 61 onto the bird 100, and
- control the actuator 33 such that the fluid discharge opening 61 impinges on the bird 100 at the target position,
all while the bird 100 is continuously moving in the first direction 101 at a transport speed schematically indicated by arrow 104. The control circuit(s) 36 may control the actuator 33 responsive to the image data such that the applicator carrier 41 transports at a varying speed that depends on the image data, to thereby position the fluid discharge opening 61 proximate the target position.

The bird vaccination system 30 may comprise a camera 50 for image data acquisition. The camera 50 may be operative to capture a 2D image, a 3D image (i.e., an image having depth information for each one of a plurality of pixels), and/or an infrared (IR) image. The camera 50 may comprise an image sensor 51. The image sensor 51 may be coupled to the control circuit(s) 36 via an interface 37. The interface 37 may be a data interface. The interface 37 may be a wired or wireless interface.

The camera 50 may be provided separately from the support 31 or may be mounted on the support. Providing the camera 50 separately from the support 31 provides enhanced versatility. Mounting the camera 50 on the support 31 provides enhanced convenience for the user.

The camera 50 is positioned generally upstream, along the first direction 101, of the applicator carrier 41. I.e., the camera 50 and applicator carrier 41 are arranged such that the bird 100 passes the camera 50 before it passes the applicator carrier 41.

The control circuit(s) 36 may be operative to control the actuator 33 responsive to the image data received at the interface 37 and/or received from the camera 50. The camera 50 and/or control circuit(s) 36 may be operative to post-process captured image data. For illustration, 3D surface contour data may be derived from the image data captured by the image sensor 51.

Figure 2 shows a bird handling system comprising a camera 50 that is implemented as a structured-light 3D camera. The camera 50 may comprise a projector 51 operative to output structured light. The image sensor 51 captures one or several time-sequential frames showing the bird 100 while it is being illuminated by the structured light. The projector 52 may comprise a light source 54, which may be a laser light source. The projector 52 may comprise optics 54 to generate the structured light. The optics 54 may comprise one or several scanners (such as galvanometer scanners), one or several aperture(s), one or several lens(es), and/or one or several beam splitter(s).

Alternatively, a stereo-camera may be used to captured 3D image data.

As illustrated in Figure 2, the projector 52 may output light in a triangular or fan shape 55 of visible or infrared light. A line 56 of the light may impinge on the bird 100, causing the line 56 to curve in accordance with the surface contour of the bird 100. Several image frames captured by the image sensor 51 in a time-sequential manner may show the bird 100 with the line 56 projected onto it, as the bird 100 is moved past the line 56 by the conveying mechanism 20. The control circuit(s) 36 may control the actuator 33 in dependence on 3D image information derived from the time-sequential image frames.

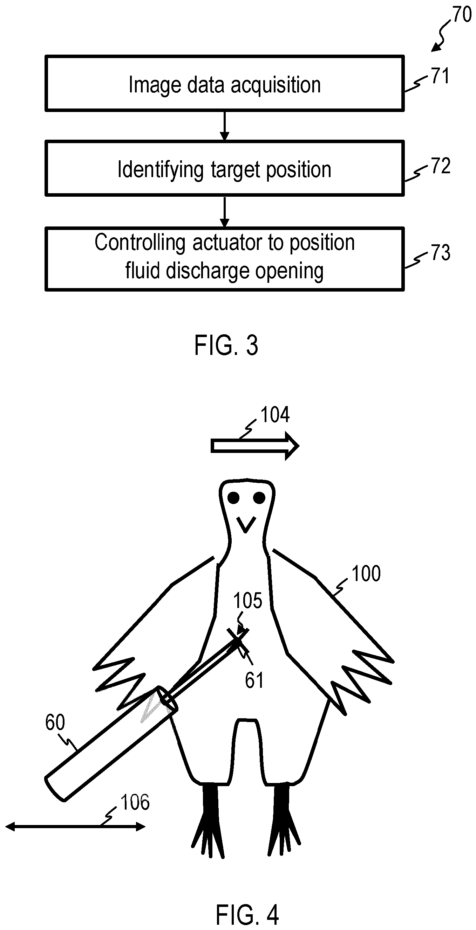

Figure 3 is a flow chart of a method 70. The method 70 may be performed automatically by the bird vaccination system 30.

At step 71, image data acquisition is performed. Image data acquisition may comprise capturing 3D and/or IR image information. Image data acquisition may comprise capturing 3D surface contour information of the bird, using a structured-light 3D camera.

At step 72, a target position is identified at which the fluid discharge opening is to impinge on the bird. Identifying the target position may comprise one or several of: determining, using the image data acquired at step 71, a position of the bird 100 relative to a retaining bracket on which the bird 100 is retained and/or physiological characteristics of the bird 100; and identifying the target position of the fluid discharge opening responsive to the position of the bird 100 relative to the retaining bracket 22 and/or the physiological characteristics of the bird 100.

At step 73, the actuator 33 may be controlled responsive to the target position identified at step 72. Controlling the actuator 33 may comprise controlling the speed at which the applicator carrier 41 is displaced along the first direction 101. Controlling the actuator 33 may comprise controlling a rotary speed of an output shaft of a motor of the actuator 33 and/or controlling a servo-drive responsive to the target position identified at step 72.

The actuator 33 may be controlled in such a manner that,
- prior to contact of the fluid discharge opening 61 with the bird 100, the applicator carrier 41 is displaced along the first direction 101 with a velocity profile that depends on the acquired image data;
- subsequent to contact of the fluid discharge opening 61 with the bird 100, the applicator carrier 41 is displaced along the first direction 101 with a velocity profile that is independent on the acquired image data and that is equal to the transport speed at which the bird 100 is being moved by the conveying mechanism 20.

Steps 71-73 may be repeated in an iterative manner to successively administer fluid (e.g., vaccination fluid) to birds. The repetition rate may be fairly high to, e.g., accommodate vaccination of at least 1000, at least 2000, at least 3000, at least 4000, at least 5000, or at least 6000 birds per hour.

Figure 4 is schematic diagram illustrating operation of the bird vaccination system 30. 3D image data or IR image data is processed to identify a target position 105 at which the fluid discharge opening 61 is to impinge on the bird 100. The fluid delivery device 60 with the fluid discharge opening 61 is displaced to effect a relative displacement of the applicator carrier 41 relative to the bird 100 while the bird 100 itself is moved at a transport speed 104. The actuator 33 is controlled responsive to the image data in such a manner that the fluid discharge opening 61 impinges on the bird 100 at the target position 105.

The fluid delivery device 60 with the fluid discharge opening 61 may perform a reciprocating movement 106 along the first direction 101, to return the fluid delivery device 60 to an initial position once a vaccination has been completed.

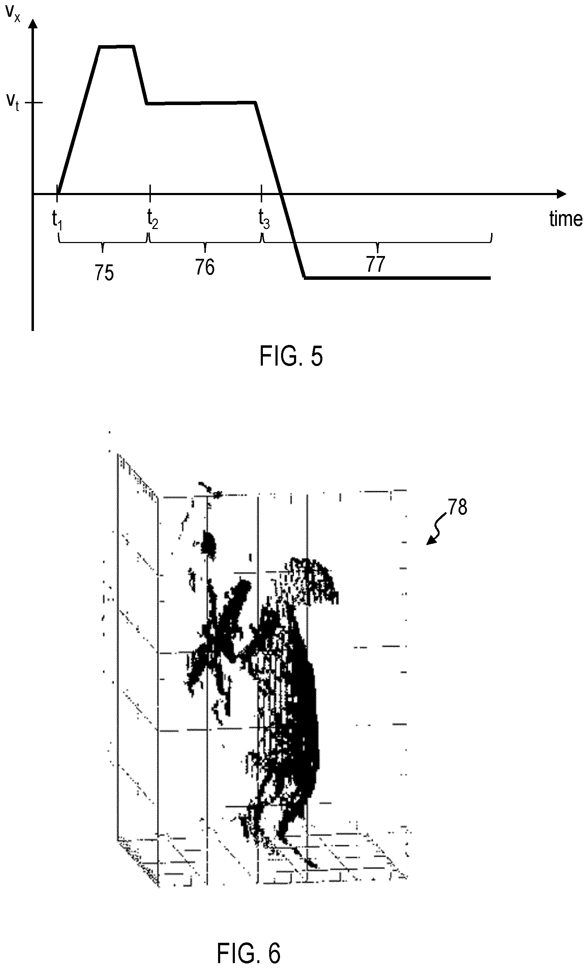

Figure 5 is a schematic view of a time-dependent velocity of the applicator carrier 41. The time-dependent velocity may be implemented to (a) correctly position the fluid discharge opening 61 relative to the bird 100 in a first time interval 75, (b) displace the applicator carrier 41 with the fluid discharge opening 61 jointly with the bird in a second time interval 76, and (c) return the applicator carrier 41 to an initial position in a third time interval 77 once fluid administration (e.g., a vaccination) has been completed.

The velocity profile in the first time interval 75 is dependent on the acquired image data. For illustration, the applicator carrier 41 with the fluid discharge opening 61 may need to be displaced faster or slower than the travel speed vₜ at which the bird is being moved, in order to ensure that the fluid discharge opening 61 is positioned in a manner that depends on the position and/or size of the bird, as reflected by the image data.

The velocity in the second time interval 76 may be substantially constant and equal to the travel speed vₜ at which the bird is being moved by the conveying mechanism 20.

The velocity in the third time interval 77 may be independent of the image data and may cause the applicator carrier 41 to be returned to an initial position before a next operating cycle starts.

Figure 6 shows exemplary surface contour data 78 of a bird derived from a series of image frames captured using a 3D line camera 50. The surface contour data 78 may be a point cloud, with each point representing a point on a surface of the bird 100. The surface contour data 78 may be used to identify a location of one or several of: a breast of the bird 100, wings of the bird 100, eyes of the bird 100, for administering a fluid (e.g., a vaccination fluid).

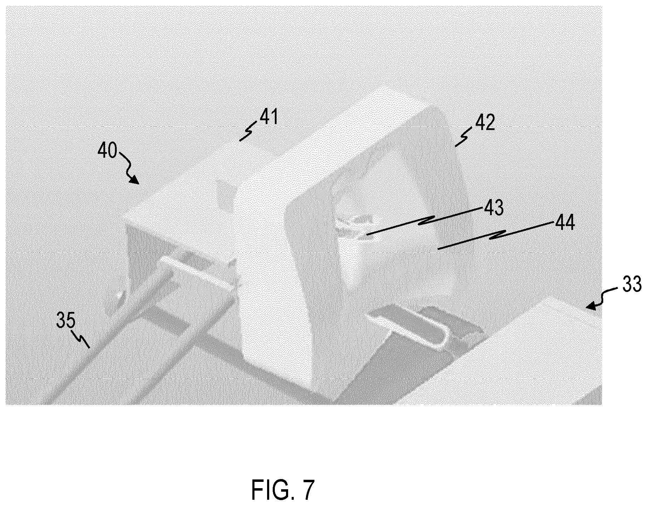

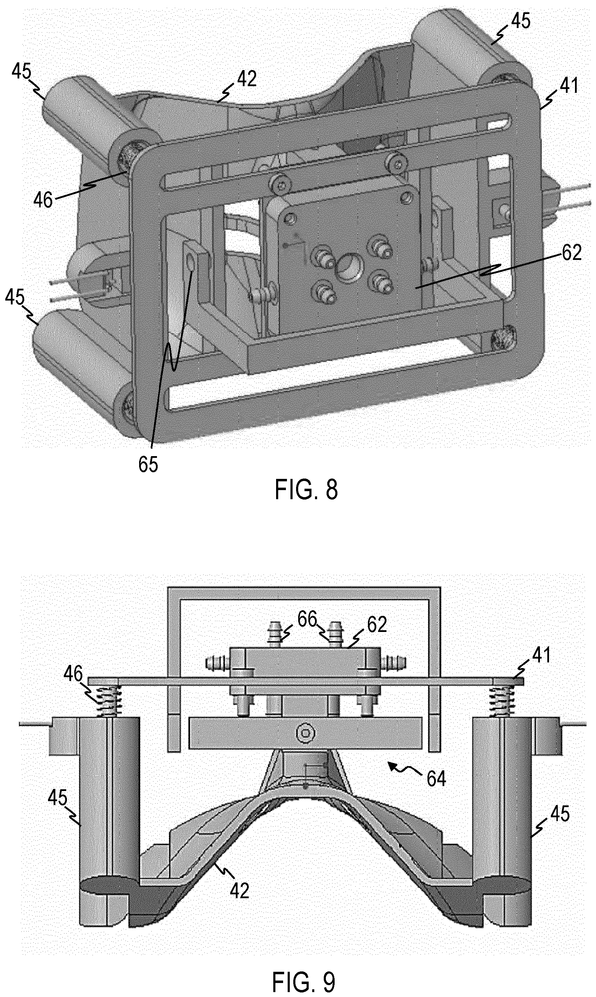

Figures 7 to 9 are partial views of the bird vaccination system. The vaccination head 40 is operative to be displaced by the actuator 33. The vaccination head 40 comprises the applicator carrier 41 and the abutment member 42. The abutment member 42 has one or several openings 43 through which the fluid discharge opening is positioned or positionable for administering fluid to the bird 100.

The abutment member 42 and the fluid delivery device with the fluid discharge opening 61 may be actively pushed against the bird 100 when the applicator carrier 41 is positioned as desired for administering the fluid. The abutment member 42 may have a contoured surface 44 that is shaped to abuttingly receive a portion of the bird's body, such as breast, wing, or head of the bird 100.

The abutment member 42 may be reversibly releasable attached to the applicator carrier 41. The bird vaccination system 30 may comprise one or several additional abutment members that are all reversibly releasably attachable to the applicator carrier 41. The different abutment members may correspond to different sizes, shapes, and/or body portions of the birds, depending on the birds that are being vaccinated (e.g., following grading of the birds) and/or depending on the part of the body to which fluid is to be administered (e.g., breast, wing, eye).

The abutment member 42 may be arranged so as to be displaceable relative to the applicator carrier 41. The abutment member 42 may be displaceable relative to the applicator carrier 41 along at least a third direction 103 which is orthogonal to the first direction 101 (along which the bird 100 is being moved past the bird vaccination system 30) and the second direction 102 (which is the vertical direction). The abutment member 42 and/or the applicator carrier 41 may comprise a linear guide mechanism 45 that may include tubular sections and rods matingly received in the tubular sections.

The bird vaccination system 30 may comprise one or several bias member(s) 46 that bias the abutment member 42 to a rest position. For fluid administration, the abutment member 42 must be displaced against the bias of the bias member(s) 46.

A fluid delivery assembly 62 is mounted on the applicator carrier 41. The fluid delivery assembly 62 may include one or several syringe barrel(s) and/or one or several needle(s) for administering fluid. The fluid delivery assembly 62 may be mounted on the applicator carrier 41 via a suspension 64. The suspension 64 may allow the fluid discharge opening(s) 61 to pivot relative to the applicator carrier 41, to better conform to the bird's body. The suspension 64 may allow the fluid discharge opening(s) 61 to pivot about a first pivot axis 65 and, optionally, about a second pivot axis. The suspension 64 may be a cardanic suspension.

The fluid delivery assembly 62 may include two or more than two fluid discharge openings (e.g., more than two needle tips). Each of the different fluid discharge openings may be operative to dispense a different one of several fluids.

The fluid delivery assembly 62 may comprise connectors 66 for receiving and/or dispensing fluid, such as vaccination fluid. Reservoirs for the fluid may be provided locally in the fluid delivery assembly 62 and/or separately from the vaccination head 40. Different ones of the connectors 66 may be in fluid communication with different ones of the fluid discharge openings.

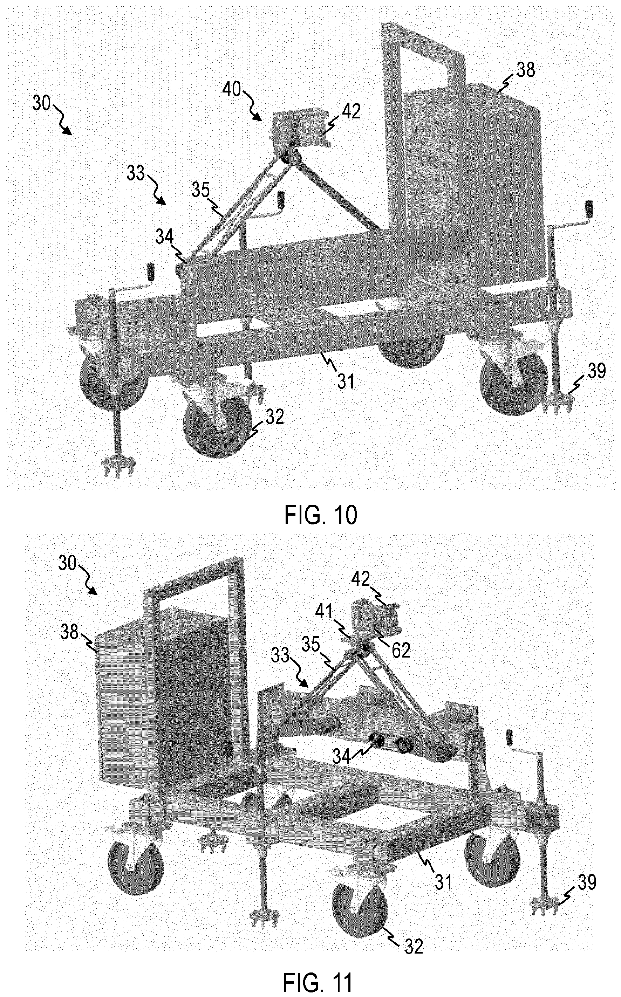

Figures 10 and 11 are perspective views of the bird vaccination system 30. The bird vaccination system 30 may comprise one or several locking mechanisms 39 for fixedly locking the bird vaccination system 30 in position proximate to the conveying mechanism 20.

A housing 38 may be arranged on the support 31 for accommodating various electronic components, such as the control circuit(s) 36, the interface (37), and, optionally, at least an image sensor 51 and/or a structured light projector 52 of the camera 50.

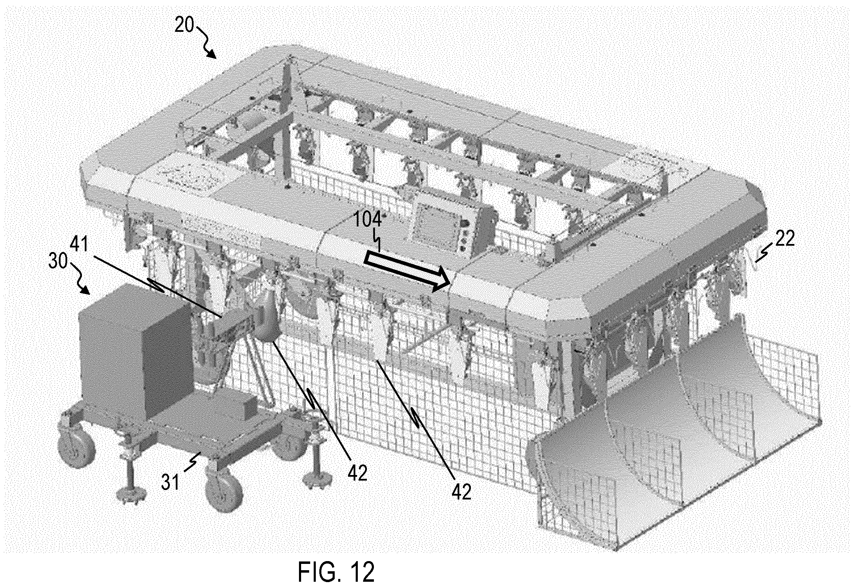

Figure 12 is a view of a bird handling system. The bird handling system comprises the conveying mechanism 20 and the bird vaccination system 30. The conveying mechanism 20 comprises retaining brackets 22 that retain the bird while it is being transported by conveying mechanism 20. Functional units such as weighting and/or grading units may be incorporated into the conveying mechanism 20.

A computer of the conveying mechanism 20 may be communicatively coupled to the bird vaccination system 10. Information on, e.g., the weight of one or several bird(s) may be communicated from the computer of the conveying mechanism 20 to the control circuit(s) 36 of the bird vaccination system for dosage adjustment or other purposes. Information on the vaccination may be communicated form the vaccination system 10 to the conveying mechanism 20 for use in, e.g., grading or determining the position at which a bird is to be released from the conveying mechanism 20.

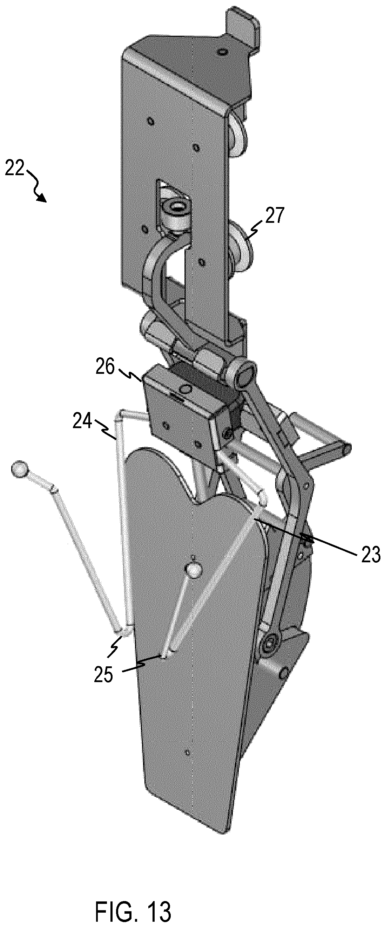

Figure 13 is a perspective view of a retaining bracket of the conveying mechanism 20. The retaining bracket 22 may be configured and operative as described in, e.g., WO 2017/125387 A1. The retaining bracket 22 may comprise a main member 26 and two generally V-shaped members 23, 24. Each V-shaped member 23, 24 has a vertex segment 25 operative to engage the bird by its scapula-humeral joint. The V-shaped members 23, 24 may be displaceable relative to the main member 26 for receiving and/or releasing the bird. The retaining bracket 22 may have an engagement section 27 for engaging a conveyor of the conveying mechanism 20.

Various effects and advantages are attained by the systems and methods according to embodiments. The systems and methods afford efficient positioning of the fluid discharge opening for administering fluid(s) to a bird. Fluid(s), such as vaccination fluids, can be administered to a bird in an efficient manner. Differences in bird position relative to its retaining bracket and/or differences in bird physiology may be taken into consideration when controlling an actuator for positioning the fluid discharge opening. The control of the actuator may be performed in a fully or at least partially automated manner, affording high throughput and fast process times.

While embodiments may use 3D surface contour information for performing control operations in a fluid administration system, the systems and methods may process IR images to determine how a fluid discharge opening is to be positioned.

While embodiments may use 3D surface contour information for performing control operations in a fluid administration system, the systems and methods may perform a feature extraction based on 2D or 3D images to determine how a fluid discharge opening is to be positioned.

While embodiments may be used in association with vaccination systems, the systems and methods may generally be used for administering various therapeutic or non-therapeutic fluids.
The invention also relates to the following aspects.
1. A bird vaccination system (30) operative to perform a vaccination of a bird (100) while the bird (100) is retained on a conveying mechanism (20) and transported by the conveying mechanism (20) along a first direction (101), the bird vaccination system (30) comprising:
   a fluid discharge device (60; 62) comprising a fluid discharge opening (61) operative to discharge at least one vaccination fluid to the bird (100);
   at least one actuator (33) operative to effect a displacement of at least the fluid discharge opening (61);
   at least one control circuit (36) operative to control the at least one actuator (33); and
   a data acquisition device (37, 50) operative to capture image data of the bird (100) retained on the conveying mechanism (20);
   wherein the at least one control circuit (36) is operative to control the at least one actuator (33) to adjust a position of the fluid discharge opening (61) relative to the bird (100) based on the image data for performing the vaccination while the bird (100) is being moved by the conveying mechanism (20).
2. The bird vaccination system (30) of aspect 1, wherein the at least one control circuit (36) is operative to adjust the position of the fluid discharge opening (61) based on the image data such that the fluid discharge opening (61) impinges on the bird (100) at a target position (105) identified based on the image data.
3. The bird vaccination system (30) of aspect 1 or aspect 2, wherein the data acquisition device (37, 50) comprises a 2D camera, a 3D camera system (51, 52), or an infrared camera.
4. The bird vaccination system (30) of any one of the preceding aspects, wherein the data acquisition device (37, 50) comprises a 3D camera system (51, 52), in particular a structured-light imaging system.
5. The bird vaccination system (30) of any one of the preceding aspects, wherein the at least one data acquisition device (37, 50) comprises a projector (52) operative to output a line (56) of visible or infrared light and an image sensor (51) operative to capture an image of the line projected onto the bird (100),
   optionally wherein the image sensor (51) is operative to capture a series of frames while the conveying mechanism (20) moves the bird (100) across the line (56) of visible or infrared light, further optionally wherein the at least one control circuit (36) is operative to control the at least one actuator (33) based on several time-sequentially captured frames of the series of frames, and/or
   optionally wherein the line (56) of visible or infrared light is positioned upstream, relative to the first direction (101), of the fluid discharge device (60; 62).
6. The bird vaccination system (30) of any one of the preceding aspects, wherein the data acquisition device (37, 50) or the at least one control circuit (36) comprises at least one integrated circuit operative to compute surface contour data (78) of the bird (100), wherein the at least one control circuit (36) is operative to control the at least one actuator (33) based on the surface contour data (78), optionally wherein the surface contour data (78) comprises 3D surface contour data and/or wherein the surface contour data (78) comprises a point cloud.
7. The bird vaccination system (30) of any one of the preceding aspects, wherein the at least one control circuit (36) is operative to control the at least one actuator (33) to adjust the position of the fluid discharge opening (61) relative to the bird (100) at least along the first direction (101), optionally both along the first direction (101) and a second direction (102, 103) orthogonal to the first direction (101).
8. The bird vaccination system (30) of any one of the preceding aspects, wherein the conveying mechanism (20) is operative to move the bird (100) in the first direction (101) at a transport speed, and the at least one control circuit (36) is operative to control the at least one actuator (33)
   such that the fluid discharge opening (61) is displaced along the first direction (101) at one or several first speeds different from the transport speed before the fluid discharge opening (61) impinges on the bird (100), the one or several first speeds being dependent on the image data, and/or
   such that the fluid discharge opening (61) is displaced along the first direction (101) at a second speed that is equal to the transport speed while the at least one vaccination fluid is being discharged via the fluid discharge opening (61).
9. The bird vaccination system (30) of any one of the preceding aspects, further comprising a support (31) and an applicator carrier (41) moveably mounted on the support (31), wherein the at least one actuator (33) is operative to displace the applicator carrier (41) relative to the support (31) to displace the fluid discharge opening (61).
10. The bird vaccination system (30) of aspect 9, wherein the fluid delivery device is mounted such that the fluid discharge opening (61) is displaceable relative to the applicator carrier (41), optionally wherein the fluid delivery device is displaceably mounted on the applicator carrier (41), further optionally wherein the fluid discharge opening (61) is arranged for pivoting and/or translatory movement relative to the applicator carrier (41).
11. The bird vaccination system (30) of aspect 9 or aspect 10, further comprising a suspension (46), in particular a cardanic suspension (46), between the fluid delivery device and the applicator carrier (41).
12. The bird vaccination system (30) of any one of the preceding aspects, further comprising an abutment member (42) operative for abutment on the bird (100), the abutment member (42) comprising an opening through which the fluid discharge opening (61) is positioned or positionable for performing the vaccination,
   optionally wherein the abutment member (42) and/or the applicator carrier (41) comprises a coupling mechanism (45, 46) for reversibly releasable attachment of the abutment member (42) to the applicator carrier (41), and/or
   optionally wherein the abutment member (42) comprises at least one additional opening through which at least one additional fluid discharge opening is positioned or positionable.
13. The bird vaccination system (30) of any one of the preceding aspects, wherein the bird vaccination system (30) is operative to perform one or several of
   a breast vaccination,
   a wing vaccination,
   an eye vaccination,
   while the bird (100) is being held on the conveying mechanism (20) by its scapula-humeral joint.
14. A bird (100) handling system, comprising:
   a conveying mechanism (20) operative to transport a bird (100); and
   the bird vaccination system (30) of any one of the preceding aspects for vaccinating the bird (100),

   optionally wherein the conveying mechanism (20) comprises a retaining bracket (22) operative to retain the bird (100) and the at least one control circuit (36) is operative to determine a position of the bird (100) relative to the retaining bracket (22) and/or physiological characteristics of the bird (100), to determine a target position of the fluid discharge opening (61) based on the position of the bird (100) relative to the retaining bracket (22) and/or based on the physiological characteristics of the bird (100), and to control the at least one actuator (33) based on the target position (105),
   further optionally wherein the retaining bracket (22) is operative to retain the bird (100) by its scapula-humeral joint.
15. A method of controlling at least one actuator (33) of a bird vaccination system (30), the bird vaccination system (30) comprising a fluid discharge device (60; 62) comprising a fluid discharge opening (61) for discharging at least one vaccination fluid to the bird (100), and at least one actuator (33) operative to effect a displacement of at least the fluid discharge opening (61), the method comprising:
   receiving, by at least one control circuit (36), image data of the bird (100) from a data acquisition device (37, 50); and
   controlling, by the at least one control circuit (36), the at least one actuator (33) to position the fluid discharge opening (61) relative to the bird (100) based on the image data prior to performing the vaccination and while the bird (100) is being moved by the conveying mechanism (20).

## Claims

1. A system (10) for administering a fluid to a bird (100) comprising,
a first fluid discharge device having a vaccination fluid reservoir in fluid communication with a fluid discharge opening, and a needle having a tip at which the fluid discharge opening is provided;
one or several additional fluid discharge devices comprising one or several additional discharge openings (43) for delivering one or several additional fluids to the bird (100); and
an abutment member (42) operative for abutment on the bird, the abutment member (42) comprising an opening (43) through which the fluid discharge opening (61) is positioned or positionable for performing a vaccination, the abutment member (42) further comprising at least one additional opening (43) through which at least one additional fluid discharge opening is positioned or positionable, wherein the system (10) is operative to perform several of a breast vaccination, a wing vaccination, an eye vaccination.

2. System (10) according to claim 1, wherein each of the different fluid discharge openings may be operative to dispense a different one of several fluids.

3. System (10) according to one of the preceding claims, wherein the administering of the fluids is semi-automated.

4. System (10) according to one of the preceding claims, wherein the abutment member (42) has a contoured surface (44) that is shaped to abuttingly receive a portion of the bird's body.

5. System (10) according to claim 4, wherein the portion of the bird's body is a breast, wing, or head of the bird (100).

6. System (10) according to one of the preceding claims, comprising an application carrier, wherein the abutment member (42) and/or applicator carrier (41) comprise a coupling mechanism for reversibly releasable attachment of the abutment member (42) to the applicator carrier.

7. System (10) according to claim 6, comprising one or several additional replacement abutment members, each operative for reversibly releasable attachment on the applicator carrier.

8. System (10) according to claim 7, wherein the abutment member (42) and at least one of the replacement abutment members may have different sizes and/or shapes.

9. System (10) according to one of the preceding claims, wherein the system (10) comprises a support (31) and wherein the support (31) has castors and/or rollers (32).

10. System (10) according to claim 9, comprising a housing (38) which is arranged on the support (31) for accommodating electronic components.

11. System (10) according to one of the preceding claims, wherein the fluid discharge openings (61) may be provided on needles or other injection elements that are operative to pierce a skin of the bird (100) for performing an administration of vaccine.

12. System (10) according to one of the preceding claims, comprising one or several locking mechanisms (39) for fixedly locking the system (10) in position.
